# EUROPÄISCHE PATENTSCHRIFT

(11) **EP 0 428 750 B1**
(45) Veröffentlichungstag und Bekanntmachung des Hinweises auf die Patenterteilung: **09.08.1995**
(21) Anmeldenummer: 90908150.7
(22) Anmeldetag: 13.03.1990
(51) Int. Cl.: B64D 15/16, B08B 7/02

(54) **VORRICHTUNG UND VERFAHREN ZUR BESEITIGUNG VON NIEDERSCHLÄGEN VON DÜNNWANDIGEN OBERFLÄCHEN**
METHOD AND DEVICE FOR REMOVING OF SEDIMENT FROM THE SURFACE OF THIM-WALLED CONSTRUCTIONS
PROCEDE ET DISPOSITIF POUR L'ENLEVEMENT DE SEDIMENTS SUR LA SURFACE DE CONSTRUCTION A PAROIS MINCES

(30) Priorität: 13.04.1989 SU 4671256
(43) Veröffentlichungstag der Anmeldung: 29.05.1991
(73) Patentinhaber: MEZHOTRASLEVOI VNEDRENCHESKY TSENTR "IMPULS", Moscow, 103001 (SU)
(72) Erfinder: LEVIN, Igor Anatolievich, Moscow, 125502 (SU)
(74) Vertreter: Beetz & Partner Patentanwälte
(86) Internationale Anmeldenummer: SU9000069
(87) Internationale Veröffentlichungsnummer: WO9011931

(56) Entgegenhaltungen:
- EP-A- 0 067 506
- WO-A-89/07492
- FR-A- 2 458 488
- GB-A- 505 433
- US-A- 3 033 157
- US-A- 3 549 964
- US-A- 4 399 967
- US-A- 4 629 149
- US-A- 4 678 144

## Beschreibung

### Technisches Gebiet

Die vorliegende Konstruktion bezieht sich auf ein Verfahren zur Beseitigung der Ablagerungen von den Oberflächen dünnwandiger Konstruktionen und kann besonders erfolgreich zur Enteisung von dünnwandigen Konstruktionen und eine Einrichtung zur Durchführung desselben.

### Zugrundeliegender Stand der Technik

Die von mir und anderen früher vorgeschlagene Einrichtung zur Enteisung der Oberflächen dünnwandiger Konstruktionen sah das Vorhandensein von Mitteln zur Generierung von Impulsen eines elektromagnetischen Feldes und Mitteln zu ihrer satten Anlage an den zu reinigenden Wänden in Längsrichtung derselben in der Weise vor, dass diese Impulse an die Wand angelegt werden und auf diese einwirken, wodurch elastische Verformungen (US-PS 3549964 von Levin e.a.) hervorgerufen werden.

Die Punktqueller erzeugten also dem Wesen nach divergierende Wellen einer elastischen Verformung, die mit Hilfe aufeinanderfolgender elektromagnetischer, hydraulischer oder pneumatischer Einzelimpulse angefacht wurden.

In der Einrichtung breitet sich eine Biegewelle der Verformung von der Punktquelle unter einer sprunghaften Verringerung der Intensität der Einwirkung in dem Masse der Entfernung von der Quelle aus. Für lineare Zylinderwellen nimmt die Intensität eine divergierenden Welle proportional zur Entfernung von der Quelle ab. Für nichtlineare Wellen erfolgt der Intensitätsabfall in dem Masse der Entfernung von der Quelle noch schneller. Infolgedessen fällt die Intensität in einem Abstand von knapp.50 mm von der Quelle um das Zweifache ab, weshalb es notwendig ist, die Leistung der Punktquellen beträchtlich zu vergrössern, was aber seinerseits gefährliche bleibende Verformungen der Beplankung bewirken kann. Andererseits ist es auch unerwünscht, die Anzahl der Quellen infolge der Vergrösserung der Masse und der mechanischen Beanspruchung von Bauelementen zu vergrössern.

### Offenbarung der Erfindung

Der Erfindung liegt die Aufgabe zugrunde, ein derartiges Verfahren zur Bewirkung einer elastischen Verformung zu schaffen, das eine gleichmässige Verteilung der Intensität der elastischen Verformung über eine zu reinigende Oberfläche ermöglicht, sowie eine Einrichtung für die Durchführung dieses Verfahrens zu entwickeln.

Die gestellte Aufgabe wird dadurch gelöst, dass in dem Verfahren zur Beseitigung der Ablagerungen von den Oberflächen dünnwandiger Konstruktionen, bestehend in der Erzeugung von elastischen Verformungen in den genannten Wänden durch Anregung von aufeinanderfolgenden mechanischen Einzelimpulsen, gemäss der Erfindung gleiche Einzelimpulse in den gegenüberliegenden Punkten einer einen zu reinigenden Flächenabschnitt umschliessenden Kontur synchron erregt werden, weshalb die nach innen der Kontur gerichteten koinzidierenden kohärenten Wellen der elastischen Verformung auf dem zu reinigenden Abschnitt miteinander zusammenwirken.

Bei einem solchen Verfahren werden eine praktisch gleichmässige Intensität der Verformungswellen im Zentralteil des Abschnitts der zu reinigenden Oberfläche und ein lediglich um das Dreifache kleinerer Intensitätabfall am Rande des Abschnitts gegenüber dem Zentralteil des Abschnitts sichergestellt, während bei Verwendung des früher bekannten Verfahrens ein zehnfacher Intensitätsabfall am Rande vorliegt. Infolge der Durchführung des erfindungsgemässen Verfahrens wird eine gleichmässige Reinigung des Flächenabschnitts erreicht.

Es ist zweckmässig, in auf einer geschlossenen Linie liegenden Punkten Einzelimpulse und synchron zu den genannten Impulsen mit ihnen identische Einzelimpulse in der Mitte des erhaltenen geschlossenen Kreises zu erregen, so dass die dabei entstehenden divergierenden Wellen der elastischen Verformung mit den koinzidierenden Wellen zusammenwirken und zu ihnen kohärent sind. Dies gestattet es, die mechanische Einwirkung auf die Gesamtfläche des zu reinigenden Abschnitts und insbesonderen an den Rändern desselben zusätzlich zu verstärken.

Derartiges Verfahren zur Beseitigung der Aglagerungen kann unter Benutzung einer Einrichtung realisiert werden, die eine elektromagnetische Quelle mechanischer Impulse beinhaltet, die an die genannten Wände zur Bewirkung von elastischen Verformungen in diesen vermittelt werden, und gemäss der Erfindung mit einem Wellenleiter für die mechanischen Kräfte der Quelle versehen ist der gegenüberliegende Teile aufweist, die den zu reinigenden Abschnitt begrenzen, symmetrisch zueinander angeordnet und mit der gemeinsamen Quelle mechanischer Impulse verbunden sind, um Einzelimpulse in den gegenüberliegenden Teilen synchron zu erregen, weshalb in den zu reinigenden Wänden koinzidierende kohärente Wellen der elastischen Verformung entstehen.

Die erfindungsgemässe Einrichtung weist eine einfache Bauform auf, ist für die Montage und Bedienung gut geeignet.

Der Wellenleiter derartiger Einrichtung kann in Form eines Ringes ausgeführt werden, bei dem in der Mitte einer der Stirnflächen eine Scheibe liegt, die mit einer elektromagnetischen Quelle gekoppelt und durch symmetrisch liegende Brücken mit dem Ring verbunden ist. Zur gleichmässigeren Energieverteilung über den zu reinigenden Abschnitt ist es zweckmässig in der Ringmitte eine Punktquelle mechanischer Impulse anzuordnen.

Bei der Reinigung länglicher Oberflächen ist ein Wellenleiter vorteilhaft, der in Form eines Paares von Parallelzweigen aus geführt ist, deren eine Enden mit einer mit der Quelle mechanischer Impulse gekonpelten Scheibe und deren andere Enden miteinander verbunden sind, während in der anderen Ausführungsform der Wellenleiter in Form zweiter Paare von Zweigen ausgeführt ist, die in entgegengesetzten Richtungen von einer Scheibe divergieren, die mit einer Quelle mechanischer Impulse gekoppelt ist, und in jedem Paar miteinander verbunden sind.

Eine der Ausführungsformen der Erfindung sieht vor, dass der Wellenleiter durch drei nach der Länge eines gedachten Kreises gleichmässig angeordnete Sektoren gebildet ist, die durch Brücken mit einer zentral angeordneten Scheibe verbunden sind, mdie mit der Quelle mechanischer Impulse gekoppelt ist.

Die Scheibe des Wellenleiters kann aus unmagnetischem Werkstoff hergestellt werden, und die elektromagnetische Quelle mechanischer Impulse ist in diesem Fall durch einen Induktor und eine Platte aus elektrisch leitendem Werkstoff gebildet, die zwischen dem Induktor und der Scheibe untergebracht ist, während in der anderen Ausführungsform die Scheibe des Wellenleiters aus magnetisch leitendem Werkstoff hergestellt und in diesem Fall die elektromagnetische Quelle mechanischer Impulse durch den Induktor und die Scheibe selbst gebildet ist, wobei der Induktor in beiden Fällen an eine elektrische Entladeeinrichtung angeschlossen ist.

Eine der Ausführungsformen sieht die Ausführung des Wellenleiters in Form eines elliptischen Ringes aus elektrisch leitendem Werkstoff vor und die Quelle mechanischer Impulse ist durch diesen Ring und einen elliptischen Induktor gebildet.

### Kurze Beschreibung der Zeichnungen

Die Erfindung soll nachstehend durch die Beschreibung konkreter, die vorliegende Erfindung aber nicht begrenzender Ausführungsformen der Erfindung anhand der beiliegenden Zeichnungen näher erläutert werden. Es zeigen.
Fig. 1 schematisch einen Schnitt durch die erfindungsgemässe Einrichtung zur Beseitigung der Ablagerungen von den Oberflächen dünnwandiger Konstruktionen:
Fig. 2 eine Seitenansicht eines Wellenleiters der in Fig. 1 dargestellten Einrichtung:
Fig. 3 ein Diagramm dar Intensitätsverteilung einer elastischen Verformung in Abhängigkeit von der Entfernung von der Mitte eines Abschnitts einer zu reinigenden Oberfläche, worin I die Intensität der elastischen Verformung in Prozent bedeutet:
Fig. 4 das gleiche Diagramm für eine vorher bekannte Einrichtung, worin I die Intensität der elastischen Verformung in Prozent bedeutet:
Fig. 5 eine andere Ausführungsform der Konstruktion des Wellenleiters:
Fig. 6 eine Ausführungsform dar Konstruktion des Wellenleiters mit Parallelzweigen:
Fig. 7 einen VII-VII-Schnitt zu Fig. 6:
Fig. 8 eine auf einer zu reinigenden Beplankung angeordnete erfindungsgemässe Einrichtung:
Fig. 9 einen IX-IX-Schnitt nach Fig. 8 (in einer Vergrösserung);
Fig. 10 einen X-X-Schnitt zu Fig. 8 (in einer Vergrösserung):
Fig. 11 eine weitere Ausführungsform der Einrichtung zur Beseitigung dar Ablagerungen.

Betrachten wir zuerst eine der Ausführungsformen der Einrichtung zur Beseitigung der Ablagerungen von einer zu reinigenden Oberfläche und deren Wirkungsweise, woraus das Wesen des erfindungsgemässen Verfahrens ersichtlich wird.

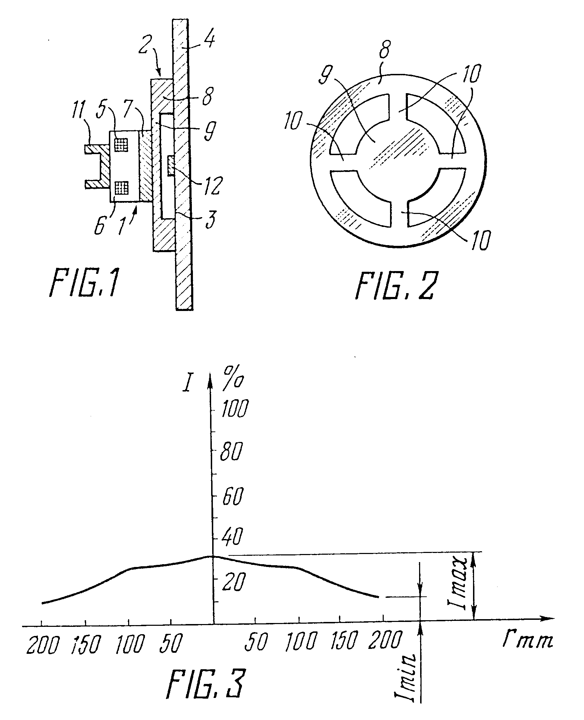

Wie aus Fig. 1 und 2 zu ersehen ist, enthält die erfindungsgemässe Einrichtung zur Beseitigung der Ablagerungen eine Quelle mechanischer Einzelimpulse und einen Wellenleiter 2, der zur Übertragung der Impulse der Quelle I auf einen zu reinigenden Flächenabschnitt 3 eines dünnwandigen Teiles 4 und zur Erregung von Wellen einer elastischen Verformung in diesem vorgesehen ist. Wie aus Fig. 1 gut ersichtlich ist, stellt die Quelle 1 mechanischer Einzelimpulse eigentlich einen Wandler elektrischer Impulse in mechanische dar und ist durch einen in einem Isoliergehäuse 6 untergebrachten Induktor 5 gebildet. Die Platte 7 aus elektrisch leitendem Werkstoff hat eine satte Anlage am Gehäuse 6. Die Strom versorgung das Induktors 5 kann von einer herkörmmlichen Quelle elektrischer Impulse (in Fig. 1 und 2 nicht angedeutet) erfolgen deren Konstruktion, wie sie in Fig. 1 der US-PS 3549964 von Levin e.a. dargestellt ist, auf die in der vorliegenden Beschreibung Bezug genommen wird, einem beliebigen erfahrenen Fachmann klar ist.

In Verbindung mit einer solchen Quelle mechanischer Impulse gelangt ein Wellenleiter 2 aus einem elektrisch schlecht oder gar nicht leitenden Werkstoff, beispielsweise aus Stahl, zum Einsatz.

Wie aus Fig. 1 und 2 gut ersichtlich ist, stellt der Wellenleiter 2 einen Ring 8 dar, der einen zu reinigenden Abschnitt 3 umschliesst. In der Stirnfläche des Ringes 8, die derjenigen gegenüber liegt, die an der zu reinigenden Oberfläche anliegt, ist ein Scheibe 9 aus aelektrisch nichtleitendem Werkstoff angeordnet, die mit dem Ring 8 durch Radialbrücken 10 verbunden ist. Der Ring 8, die Scheibe 9 und die Brücken 10 sind als ein einheitliches Ganzes ausgebildet, um die günstigsten Bedingungen zur Übertragung der mechanischen Kräfte durch den Wellenleiter zu schaffen. Die Brücken 10 verlaufen radial und stehen senkrecht aufeinander. Derartige Konstruktion des Wellenleiters kann durch Drehbearbeitung eines zylindrischen Werkstücks aus Stahl hergestellt werden.

Die Quelle 1 mit ihrer Platte 7 ist auf der Scheibe 9 angeordnet und an einem Träger 11 befestigt.

Betrachten wir die Arbeitsweise der beschriebenen Einrichtung, aus der auch das Wesen das erfindungsgamässen Verfahrens klar hervorgeht.

Beim Anlegen eines Speiseimpulses an den Induktor 5 entsteht in der Platte 7 ein Kraftimpuls, der an die Scheibe 9 des Wellenleiters 2 und über die Radialbrücken 10 an den Ring 8 des Wellenleiters vermittelt wird. Diese Einzelimpulse rufen in einem dünnwandigen Teil 4, indem sie auf diesen einwirken, elastische Verformungen hervor, die sich teils nach aussen, teils nach innen des Ringes 8 ausbreiten. Die elastischen Verformungen breiten sich also nach innen des Ringes 8 in Form von gegenläufigen konvergierenden kohärenten Wellen aus, und bei der Zusammenwirkung dieser konvergierenden kohärenten Wellen der elastischen Verformung wird eine Intensitätsverteilung bei diesen entsprechend einem in Fig. 3 dargestellten Diagramm erzielt.

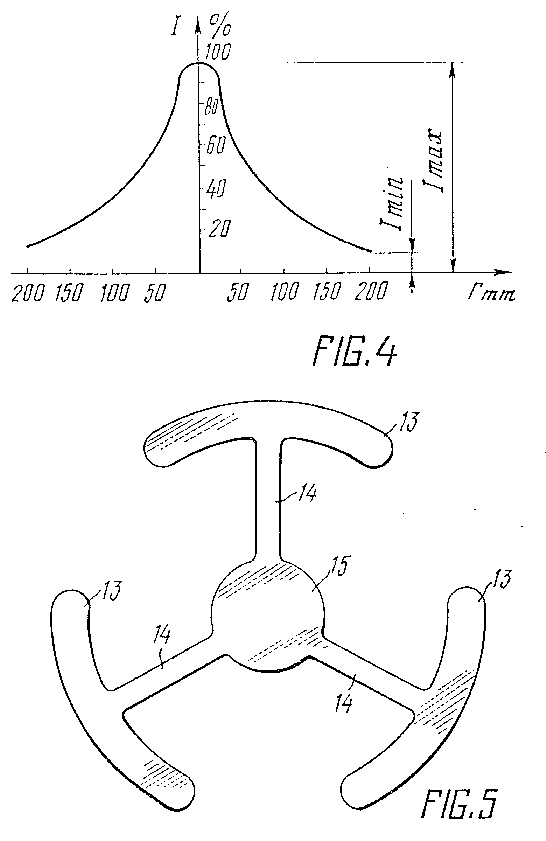

Wie aus Fig. 3 zu ersehen ist, verteilt sich die Intensität I der elastischen Verformung über die Gesamtfläche des zu reinigenden Abschnitts gleichmässig, und ein dreifacher Intensitätsabfall liegt lediglich am Rande vor. Zur selben Zeit ist bei Benutzung von divergierenden Wellen am Rande dem Abschnitts, wie aus Fig. 4 ersichtlich, ein zehnfacher Intensitätsabfall zu verzeichnen. Und dies bedeutet, dass der Spitzenwert der aufgenommenen Leistung nach dem erfindungsgemässen Verfahren gegenüber dem vorher bekannten um das ca. Dreifache verringert werden kann.

Eine noch bessere Intensitätsverteilung wird in der Mitte des zu reinigenden Abschnitts bei der Anordnung einer zusätzlichen Quelle 12 mechanischer Impulse erreicht, die in Fig. 1 schematisch angedeutet ist. Diese Quelle mechanischer Impulse kann in Form eines Mittels zur Generierung von Impulsen eines elektromanetischen Feldes ausgeführt werden, die mit einem dünnwandiger Teil zusammenwirken und Wellen der elastischen Verformungen in Analogie zu dem erzeugen. wiw dies in der US-PS 3549964 von Levin e.a. beschrieben ist. Es geht nur darum, Impulse der Quelle 12 derart zu wählen, dass die durch diese erregten Wellen der elastischen Verformungen zu den durch die Quelle 1 erzeugten Wellen kohärent sind.

Aus der Betrachtung der oben beschriebenen Einrichtung zur Beseitigung der Ablagerungen von den Oberflächen dünnwandiger Konstruktionen geht hervor, dass das erfindungsgamässe Verfahren dadurch gezeichnet wird,dass gleiche Einzelimpulse in den gegenüberliegenden Punkten der Kontur, im genannten Beispiel eines Kreises, der den zu reinigenden Abschnitt umschliesst, synchron erzeugt werden. Die hierbei entstehenden elastischen Verformungen stellen konvergierende kohärente Wellen dar, was eine gleichmässige Kräfteverteilung über die Gesamtfläche des zu reinigenden Abschnitts gewährleistet.

Vorstehend wurde auf die Ausführungsform der Einrichtung mit dem Wellenleiter aus elektrisch nichtleitendem Werkstoff und auf die diesem Fall entsprechende Ausführungsform dar Impulsquelle eingegangen. Bei der Ausführung des Wellenleiters aus elektrisch leitendem Werkstoff unterscheidet sich die Quelle mechanischer Impulse von der oben beschriebenen dadurch, dass sie keine Platte 7 aufweist, deren Funktion wird durch die Scheibe des Wellenleiters übernommen wird.

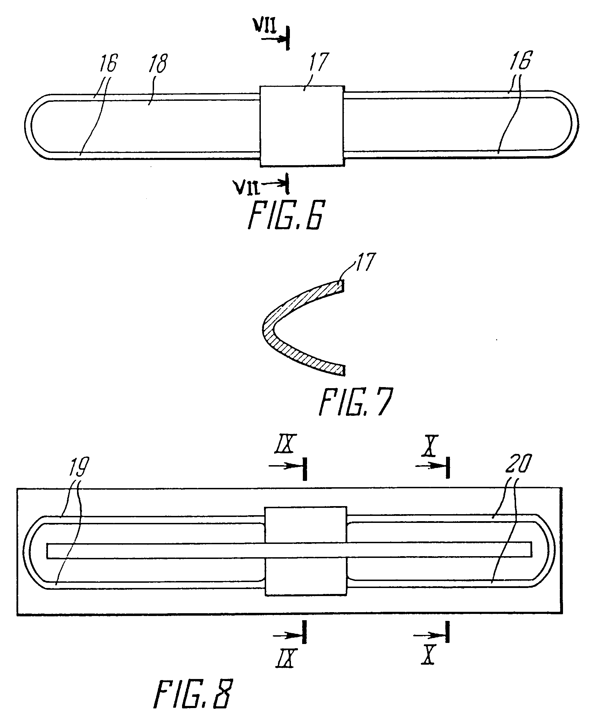

Es sind verschiedene konstruktive Ausführungs - formen der Einrichtung zur Beseitigung der Ablagerungen von den Oberflächen dünnwandiger Konstruktionen möglich. Speziell ist in Fig. 5 ein Wellenleiter schematisch angedeutet, der durch drei Sektoren I3 gebildet ist, die durch Brücken 14 mit einer Scheibe 15 verbunden sind, die zur Anordnung einer Quelle mechanischer Impulse daran beispielsweise in Analogie zu der in Fig. 1 gezeigten, bestimmt ist. Die Sektoren 15 liegen in einem Kreis und bewirken bei deren Anordnung auf dem zu reinigenden Abschnitt eines dünnwandigen Teiles elastische Verformungen bei diesem, die gegenläufige kohärente Welle darstellen.

Fig. 6 zeigt schematisch einen Wellenleiter, der Parallelzweige I6 aufweist, die mit einer Scheibe 17 verbunden sind, die im Querschnitt eine in Fig. 7 gezeigte und der Konfiguration des zu reinigenden Teiles, beispielsweise dem Profil eines Flugzeugflügels, entsprechende Form besitzt. Diese Zweige I6 begrenzen einen Raum 18, der mit Hilfe der erfindungsgemässen Einrichtung gereinigt wird. Hierbei werden die konvergierenden kohärenten Wellen der elastischen Schwingungen zwischen den parallelen Wellenleitern gebildet.

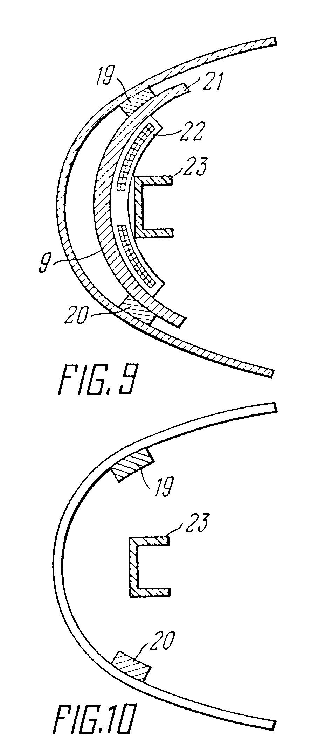

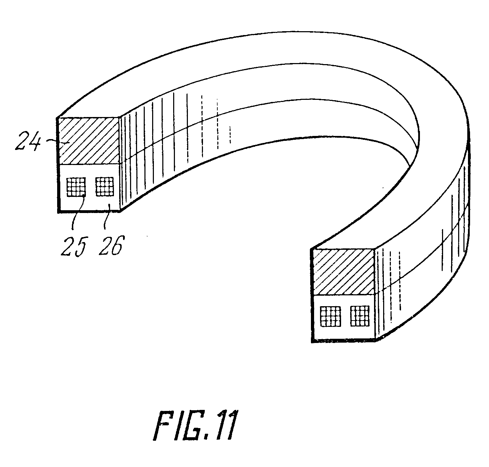

In Fig. 8 bis 10 ist schematisch eine weitere Ausführungsform der Ernrichtung zur Beseitigung der Ablagerungen dargestellt die einen Wellenleiter mit zwei Paaren von Parallelzweigen 19 und 20 (Fig. 8 und 9) enthält, die mit einer Scheibe 21 (Fig. 9) parabolischen Querschnitts verbunden sind, die einen Induktor 22 parabolischer Form trägt, der an einem Träger 23 befestigt ist.

Und schliesslich kann die erfindungsgemässe Einrichtung in Form eines elliptischen Ringes 24, wie in Fig. 11 gezeigt, ausgeführt werden, dar zur Anordnung auf dem zu reinigenden Abschnitt einer dünnwandigen Konstruktion vorgesehen und mit einem in einem Gehäuse 26 untergebrachten elliptischen Induktor 25 der gleichen elliptischen Konfiguration wie auch beim Ring versehen ist.

### Industrielle Verwertbarkeit

Die erfindungsgemässe Einrichtung zur Beseitigung der Ablagerungen von den Oberflächen dünnwandiger Konstruktionen kann auch zur Enteisung der Tragflächen- und Seitenbeplankung bei Flugzeugen bzw. Schiffen der Wände von Wagen und anderen Verkehrsmitteln verwendet werden.

## Patentansprüche

1. Verfahren zur Beseitigung der Ablagerungen von den Oberflächen dünnwandiger Konstruktionen, bestehend in der Erzeugung von elastischen Verformungen in den genannten Wänden durch Anregung von aufeinanderfolgenden mechanischen Einzelimpulsen, dadurch **gekennzeichnet,** dass gleiche Einzelimpulse in den gegenüberliegenden Punkten einer einen zu reinigenden Flächenabschnitt umschliessenden Kontur synchron erregt werden, weshalb die nach innen der Kontur gerichteten koinzidierenden kohärenten Wellen der elastischen Verformung miteinander zusammenwirken.

2. Verfahren nach Anspruch 1, dadurch **gekennzeichnet**, dass in auf einer geschlossenen Linie liegenden Punkten Einzelimpulse und synchron zu den genannten Impulsen mit ihnen identische Einzelimpulse in der Mitte des erhaltenen geschlossenen Kreises erregt werden, so dass die dabei entstehenden divergierenden Wellen der elastischen Verformung mit den koinzidierenden Wellen zusammenwirken und zu ihnen kohärent sind.

3. Einrichtung zur Beseitigung der Ablagerungen von den Oberflächen dünnwandiger Konstruktionen, die eine elektromagnetische Quelle (1) mechanischer Impulse beinhaltet, die an die genannten Wände (4) zur Bewirkung von elastischen Verformungen in diesen vermittelt werden, dadurch **gekennzeichnet**, dass sie mit einem Wellenleiter (2) für die mechanischen Kräfte der Quelle (1) versehen ist, der gegenüberliegende Teile aufweist, die den zu reinigenden Abschnitt (3) begrenzen, symmetrisch zueinander angeordnet und mit der gemeinsamen Quelle (1) mechanischer Impulse verbunden sind, um Einzelimpulse in den gegenüberliegenden Teilen synchron zu erregen, weshalb in der zu reinigenden Wand (4) koinzidierende kohärente Wellen der elastischen Verformung entstehen.

4. Einrichtung nach Anspruch 3, dadurch **gekennzeichnet,** dass der Wellenleiter in Form eines Ringes (8) ausgeführt ist, bei dem in der Mitte in einer seiner Stirnflächen eine Scheibe (9) liegt die mit einer elektromagnetischen Quelle (5) gekoppelt und durch symmetrisch liegende Brücken (10) mit dem Ring (8) verbunden ist.

5. Einrichtung nach Anspruch 3, dadurch **gekennzeichnet**, dass der Wellenleiter in Form eines Paares von Parallelzweigen (16) ausgeführt ist, deren eine Enden mit einer mit der Quelle mechanischer Impulse gekoppelte Scheibe (17) und deren andere Enden miteinander verbunden sind.

6. Einrichtung nach Anspruch 3, dadurch **gekennzeichnet**, dass der Wellenleiter in Form zweier Paare von Zweigen (19, 20) ausgeführt ist, die in entgegengesetzten Richtungen von einer Scheibe (21) divergieren, die mit einer Quelle (22) mechanischer Impulse gekoppelt ist, wobei die Parallelzweige jedes Paares miteinander an den Enden verbunden sind.

7. Einrichtung nach Anspruch 3, dadurch **gekennzeichnet**, dass der Wellenleiter durch drei nach der Länge eines gedachten Kreises gleichmässig angeordnete Sektoren (13) gebildet ist, die durch Brücken (14) mit einer zentral angeordneten Scheibe (15) verbunden sind, die mit der Quelle mechanischer Impulse gekoppelt ist.

8. Einrichtung nach Anspruch 4, dadurch **gekennzeichnet,** dass in der Mitte des Ringes (8) von der zur Anordnung an einer zu reinigenden Konstruktion vorgesehenen Seite eine Quelle (12) mechanischer Impulse liegt, die zu den Impulsen der Quelle (1) identisch sind, und die Impulse synchron mit dieser Quelle erzeugt.

9. Einrichtung nach den Ansprüchen 4, 5, 6 oder 7, dadurch **gekennzeichnet**, dass die Scheibe (9) des Wellenleiters aus elektrisch nichtleitendem Werkstoff hergestellt und die elektromagnetische Quelle mechanischer Impulse durch einen mit einer elektrischen Entladestromquelle verbundenen Induktor und eine zwischen dem Induktor und der Scheibe angeordnete Platte (7) aus elektrisch leitendem Werkstoff gebildet ist.

10. Einrichtung nach den Ansprüchen 4, 5, 6 oder 7, dadurch **gekennzeichnet**, dass die Scheibe (17, 21) des Wellenleiters aus elektrisch leitendem Werkstoff hergestellt und die elektromagnetische Quelle mechanischer Impulse durch den mit der elektrischen Entladestromquelle verbundenen Induktor und die Scheibe selbst gebildet ist.

11. Einrichtung nach Anspruch 3, dadurch **gekennzeichnet**, dass der Wellenleiter in Form eines elliptischen Ringes (24) aus elektrisch leitendem Werkstoff hergestellt und die Quelle mechanischer Impulse durch diesen Ring (24) und einen elliptischen Induktor (25) gebildet ist, der unmittelbar an diesem Ring (24) angeordnet und mit der elektrischen Entladestromquelle verbunden ist.

## Claims

1. A method for removing deposits from the surfaces of thin-walled structures, comprising generating elastic deformations in said walls by way of exciting consecutive single mechanical pulses, **characterized** in that equal single pulses are excited synchronously in opposite to each other points along the contour encompassing the section of surface being cleaned, with the result that the converging coherent waves of elastic deformation directed inwards the contour interact with one another.

2. A method according to Claim 1, **characterized** in that single pulses are excited in the points arranged along the closed contour, single pulses identical to said pulses are excited in the center of this contour synchronously with said pulses so that the emerging diverging waves of elastic deformation interact with the converging waves and are coherent thereto.

3. A device for removing deposits from the surface of thin-walled structures, comprising an electromagnetic source (1) of mechanical pulses transmitted to said walls (4) to generate elastic deformations therein, **characterized** in that it is furnished with a waveguide (2) of mechanical forces of the source (1) having opposite parts limiting the section (3) being cleaned and arranged symmetrically to each other and connected to the common source (1) of mechanical pulses for synchronous excitation of single pulses in the opposite parts, with the result that converging coherent waves of elastic deformation arise in the wall being cleaned.

4. A device according to Claim 3, **characterized** in that the waveguide is made in the form of a ring (8), a disk (9) articulated with the electromagnetic source (5) being accommodated in the center of one of the ring end planes, said disk (9) being connected to the ring (8) by symmetrically arranged jumpers (10).

5. A device according to Claim 3, **characterized** in that the waveguide is made in the form of a pair of parallel arms (16), some ends of which are connected to the disk (17) articulated with the source of mechanical pulses, and the other ends are interconnected to one another.

6. A device according to Claim 3, **characterized** in that the waveguide is made in the form of two pairs of arms (19, 20), diverging in the opposite directions from the disk (21) articulated with the source (22) of mechanical pulses, in so doing, the parallel arms of each pair are interconnected by the ends.

7. A device according to Claim 3, **characterized** in that the waveguide is formed by three sectors (13) arranged uniformly lengthwise an imaginary circumference and connected by jumpers (14) with a centrally arranged disk (15) articulated with the source of mechanical pulses.

8. A device according to Claim 4, **characterized** in that arranged in the center of the ring (8) from the side designed to be accommodated on the structure being cleaned is the source (12) of mechanical pulses identical to the pulses of the source (1), which generates pulses synchronously with said source.

9. A device according to Claims 4, 5, 6 or 7, **characterized** in that the disk (9) of the waveguide is made of a nonconducting material and the electromagnetic source of mechanical pulses is made up of an inductor connected to the electric discharge source of current and the plate (7) of a conducting material which is arranged between the inductor and the disk.

10. A device according to Claims 4, 5, 6 or 6, **characterized** in that the disk (17, 21) of the waveguide is made of a conducting material and the electromagnetic source of mechanical pulses is made up of the inductor connected to the electric discharge source of current and the disk per se.

11. A device according to Claim 3**,characterized** in that the waveguide is made in the form of an elliptic ring (24) from a conducting material and the source of mechanical pulses is made up of this ring (24) and an elliptic inductor (25) arranged directly in this ring and connected to the electric discharge source of current.

## Revendications

1. Procédé destiné à enlever des dépôts des surfaces des structures à parois minces consistant à créer des déformations élastiques dans lesdites parois en engendrant successivement des impulsions mécaniques isolées, **caractérisé** en ce qu'on excite an synchronisme des impulsions isolées identiques aux points situés en opposition sur un contour qui entoure la partie à nettoyer de la surface de façon que les ondes cohérentes de déformation élastique qui se rapprochent et, sont orientées vers l'intérieur du contour, interactionnent entre elles.

2. Procédé selon la revendication 1, **caractérisé** en ce qu'on excite des impulsions isolées aux points, disposés sur un contour bouclé et on amorce, an synchronisme avec les impulsions susmentionnées, des impulsions isolées identiques à celles-ci au centre dudit contour de façon que les ondes de la déformation élastique qui sont alors engendrées et s'éloignent vers l'extérieur du contour interactionnent avec les ondes qui se rapprochent de l'intérieur, et sont cohérentes par rapport à celles-ci.

3. Dispositif, destiné à enlever des dépôts des surfaces des structures à parois minces, comportant une source électromagnétique, (1) d'impulsions mécaniques transmises par las parois susmentionnées (4) pour la création de déformations élastiques **caractérisé** en ce qu'il est pourvu d'un guide d'ondes (2) des efforts mécaniques de la source (1) ayant des parties qui sont situées en opposition, limitent la partie à nettoyer (3), sont disposées d'une manière symétrique l'une par rapport à l'autre et liées à la source commune (1) d'impulsions mécaniques pour l'excitation synchrone d'impulsions isolées dans les parties opposées, en conséquence, des ondes cohérentes de la déformation élastique, qui se rapprochent, sont angendrées dans la paroi à nettoyer.

4. Dispositif selon la revendication 3, **caractérisé** en ce que le guide d'ondes est réalisé sous la forme d'une bague (8) au centre de laquelle dans l'un des plans en bout est disposé un disque (9) raccordé à une source électromagnétique (5) et lié par des barrettes (10), disposées d'une manière symétrique, À la bague (8).

5. Dispositif selon la revendication 3, **caractérisé** en ce que la guide d'ondes est constitué par un couple de brins parallèles (16), les unes des extrémités desquels sont liées à un disque (17), raccordé à la source d'impulsions mécaniques, les autres extrémités desdits brins étant connectées les unes aux autres.

6. Dispositif selon la revendication 3, **caractérisé** en ce que le guide d'ondes est constitué par deux couples de brins (19, 20) qui s'éloignant dans les directions inverses d'un disque (21), raccordée à une source (22) d'impulsions mécaniques, las extrémités des brins parallèles de chaque couple étant liées l'une à l'autre.

7. Dispositif selon la revendication 3, **caractérisé** en ce que le guide d'ondes est constitué par trois secteurs (13) disposés régulièrement en longueur de la circonférence imaginaire et raccordés par des barrettes (14) avec un disque (15) disposé au centre et raccordé à la source d'impulsions mécaniques.

8. Dispositif selon la revendication 4, **caractérisé** an ce qu'on a placé au centre de la bague (8) du côté destiné à être posé sur la structure à nettoyer une source d'impulsions mécaniques (12) qui sont identiques aux impulsions de la source (1) et produisent ses impulsions an synchronisme avec cette source.

9. Dispositif selon les revendications 4, 5, 6 ou 7, **caractérisé** en ce que le disque (9) du guide d'ondes est fabriqué à partir d'une matière non conductrice et la source électromagnétique d'impulsions mécaniques est formée par un inducteur, lié à une source courant électrique à décharge et à une plaque (7) en matériau conducteur électrique logée entre l'inducteur et le disque.

10. Dispositif selon les revendications 4, 5, 6 ou 7, **caractérisé** en ce que la disque (17, 21) du guide d'ondes est fabriqué à partir d'un matériau conducteur électrique et la source électromagnetique d'impulsions mécaniques est formée par un inducteur lié à une source de courant électrique à décharge et au disque.

11. Dispositif selon les revendications 4, 5, 6 ou 7, **caractérisé** en ce que le disque (17, 21) du guide d'ondes est réalisé sous la forme d'un anneau ellipsoïdal (24) fabriqué à partir d'un matériau conducteur électrique et la source d'impulsions mécaniques est formée par cet anneau (24) et par un inducteur ellipsoïdal (25) monté directement sur ledit anneau et lié à une source de courant électrique à décharge.
